# EUROPÄISCHE PATENTSCHRIFT

(11) **EP 1 028 151 B1**
(45) Veröffentlichungstag und Bekanntmachung des Hinweises auf die Patenterteilung: **24.04.2002**
(21) Anmeldenummer: 00101914.0
(22) Anmeldetag: 01.02.2000
(51) Int. Cl.: C09J 133/06, C09J 163/00

(54) **Haft- und Strukturklebstoff zur aggressiven Fixierung von Fügeteilen mit anschliessender Aushärtung in der Klebefuge mittels thermischer Energiezufuhr**
Pressure sensitive adhesive and structural adhesive for the aggressive fixation of joint parts followed by curing in the glue joint adding thermal energy
Adhésif sensible à la pression et adhésif de structure pour une fixation agressive de pieces d'assemblage suivie d'une durcissage dans le joint de colle par d'énergie thermique

(30) Priorität: 12.02.1999 DE 19905800
(43) Veröffentlichungstag der Anmeldung: 16.08.2000
(73) Patentinhaber: Lohmann GmbH & Co. KG, 56567 Neuwied (DE)
(72) Erfinder: Pahl, Andreas, Dr., 56567 Neuwied (DE)
(74) Vertreter: Flaccus, Rolf-Dieter, Dr.

(56) Entgegenhaltungen:
- EP-A- 0 016 247
- CA-A- 987 428

## Beschreibung

Die Erfindung betrifft einen Haft- und Strukturklebstoff zur aggressiven Fixierung über eine Klebefuge zu verbindender Fügeteile mit anschließender Aushärtung durch einhergehenden Kohäsionsaufbau in der Klebefuge mittels thermischer Energiezufuhr, enthaltend eine Mischung von Copoly(meth)-acrylaten und Epoxidharzen. Ferner betrifft die Erfindung eine Verwendung des Strukturklebstoffs sowie ein Verfahren zu dessen Härtung in der Klebefuge.

Als Haftklebstoff wird eine Klebstoffart bezeichnet, die in lösemittelfreiem Zustand bei Zimmertemperatur dauerhaft klebrig ist und bei direktem Kontakt auf einer Vielzahl von Oberflächen haftet, wobei durch Andrücken an die Oberfläche der zu verklebenden Fügeteile eine Benetzung herbeigeführt wird, die ausreichende Haftungskräfte ergibt. Die Anwendung dieser Haftklebstoffe ist weit verbreitet. Sie werden beispielsweise zur Herstellung von selbstklebenden Artikeln eingesetzt, z.B. für Klebebänder oder Klebefolien, Selbstklebeetiketten, Pflaster, Briefmarken, und ähnliches. Der Stand der Technik auf dem Gebiet des Haftklebens wird z.B. in I. Benedek, L.J. Heymans, Pressure-sensitive adhesive technology, Marcel Decker, Inc. 1. Auflage 1997, wiedergegeben.

Basispolymere moderner Haftklebstoffe sind vorwiegend Polyacrylate, Natur- und Synthesekautschuke, Polyester, Polychloropren, Polyisobutene, Polyvinylether, Polyurethane und Polysiloxane, die vielfach in Kombination mit Zusatzstoffen wie beispielsweise Harzen, Weichmachern, Füllstoffen und/oder Stabilisatoren eingesetzt werden. Basispolymere fallen in den meisten Fällen als Ergebnis einer Polymerisation in Lösung oder Dispersion an, wobei deren fließfähige Konsistenz Voraussetzung für eine weitere Verarbeitung ist.

Grundsätzlich ist davon auszugehen, daß durch Anpressen entwickelte Haftungskräfte und Festigkeitseigenschaften einer Haftklebeschicht nicht in einer Größenordnung liegen, wie sie von chemisch reagierenden Klebstoffen bekannt sind, bei denen sich räumlich vernetzte Molekülstrukturen ausbilden, so daß sie Duromeren zuzuordnen sind. Haftklebschichten können daher oft ohne Zerstörung der geklebten Substrate von deren Oberfläche wieder abgezogen werden. Sie werden bevorzugt dort eingesetzt, wo eine spätere Trennung der Klebung erwünscht ist.

Als Struktur- bzw. Konstruktionsklebstoffe, die z.B. bei der Montage in der Automobil- und Bauindustrie angewendet werden, sind Haftklebstoffe nur bedingt geeignet. Da deren Polymerketten meistens nur physikalisch und reversibel vernetzt sind, sind sie kaum kohäsiv belastbar. Ihnen fehlt die in der Praxis unerläßliche hohe thermisch-mechanische innere Festigkeit mit Hochtemperatur- und Lösemittelbeständigkeit.
Als Konstruktionsklebstoffe werden z.B. Epoxidharze oder Cyanoacrylate eingesetzt.
Nach der ASTM-Definition sind strukturelle Klebungen gekennzeichnet durch Verwendung von Fügeteilen mit hoher innerer Festigkeit, wie z.B. Metallen, Holz, Keramik und verstärkten Kunststoffen. Der Klebstoff soll in der Lage sein, innerhalb der vorgeschriebenen Grenzen Spannungsverteilungen zwischen den Fügeteilen auszugleichen, ohne daß Spannungsrißbildung auftritt. Außerdem soll die strukturelle Klebung über einen vergleichsweise langen Zeitraum typischen Umwelteinflüssen widerstehen können. Den Stand der Technik auf dem Gebiet der Strukturklebstoffe gibt z.B. S. R. Hartshorn (ed.), Structural adhesives, Plenum Press, 1. Auflage 1986, wieder.

Die Aushärtung von Struktur- oder Konstruktionsklebstoffen mit einhergehendem Kohäsionsaufbau in einer Klebefuge findet üblicherweise durch thermische Energiezufuhr statt. Während des Aushärtungsprozesses müssen die zu verklebenden Teile in Lage gehalten und fixiert werden, was häufig durch Hilfsmittel wie mechanische Verklammerungen, Nieten oder Nageln erfolgt. Diese müssen vielfach nach dem Aushärtungsprozeß entfernt werden, was den Montagevorgang kompliziert.

In EP 0 386 909 wird ein durch UV-Strahlung herstellbares Prepolymerisat auf Copolyacrylatbasis beschrieben, das mit einem latenten Härter und einem phenolischen Epoxidharz gemischt wird und nach Beschichtung auf einem bahnförmigen Trägermaterial durch UV-Strahlung weiterpolymerisiert wird. Der Haftklebstoff ist thermisch nachvernetzbar, wobei die in der Copolyacrylatmatrix vorhandenen Epoxidharz- und Härteranteile miteinander reagieren. Die Reaktivität dieses Systems ist jedoch so stark, daß schon bei Raumtemperatur ein langsames Durchhärten mit einhergehendem Klebkraftverlust stattfindet. Die Lagerfähigkeit der daraus hergestellten Klebebänder ist infolgedessen stark eingeschränkt und kann erst bei Tieftemperaturlagerung erreicht werden.

In WO 94/29399 wird eine ähnliche Zusammensetzung beschrieben, jedoch werden kationisch härtende Epoxidharze verwendet.

US 5,593,759 beschreibt ein Copolyacrylat auf Lösemittelbasis, das mit einem anionisch härtenden Epoxidharz auf Basis von Bisphenol A gemischt wird. Diese Zusammensetzung wird jedoch nicht zur Herstellung eines Haftklebstoffs, sondern eines Trägermaterials verwendet, wobei die Aushärtung schon vorweggenommen wird, so daß das entstehende bahnförmige Material nicht mehr nachvernetzbar ist.

Die beschriebenen Haftklebstoffsysteme haben darüber hinaus den Nachteil, daß die jeweilige Epoxidharzkomponente selbst nicht haftklebend ist, was sich negativ auf die Klebkraft des Gesamtgemisches auswirkt.

Es besteht daher ein Bedarf an Klebstoffen für konstruktive bzw. strukturelle Klebungen, die die vorgenannten Nachteile vermeiden. Diese sollen als aggressive Haftklebstoffe in der Lage sein, die zu verbindenden Teile zunächst mit hoher Klebkraft zu fixieren, um dann im geklebten Zustand durch Zufuhr thermischer Energie, z.B. in einer Lackhärtungsanlage oder einer Anlage für induktive Erwärmung, wie sie beispielsweise in der DE 197 25 840 beschrieben ist, ein irreversibles Molekülnetzwerk aufzubauen, das sich durch hohe chemische und Temperaturbeständigkeit auszeichnet. Trotz der Möglichkeit der thermischen Nachhärtung soll die Klebkraft dieser Haftklebstoffe bei Raumtemperatur über längere Zeit konstant bleiben.

Der Erfindung liegt die Aufgabe zugrunde, einen Klebstoff anzugeben, der den vorgenannten Anforderungen entspricht.

Zur Lösung dieser Aufgabe wird bei einem Strukturklebstoff zur aggressiven Fixierung über eine Klebefuge zu verbindender Fügeteile der im Oberbegriff von Anspruch 1 bezeichneten Art mit der Erfindung vorgeschlagen, daß die Mischung von Copoly(meth)acrylaten und Epoxidharzen als aktivierbare Komponente zur thermischen Härtung sowie in der Funktion als Klebharz ein Copolymer enthält.
Mit Vorteil wird durch die erfindungsgemäße Mischung ein Struktur- oder Konstruktionsklebstoff erzielt, welcher die Nachteile der Haftklebstoffe des Standes der Technik vermeidet, indem er bei strukturellen Klebungen die zu verbindenden Fügeteile zunächst mit vergleichsweise hoher Klebkraft und insbesondere ohne mechanische Verklammerungen, Nieten oder Nageln fixiert, und sodann im Produktionsprozeß im verklebten Zustand durch Wärmezufuhr bei Temperaturen von ca. 120 bis 180 °C bei einer Behandlungsdauer zwischen 3 und 30 min. vollständig erhärtet.
Hierbei wirkt das Copolymer mit Maleinsäure als Monomerbaustein, welcher überraschenderweise in Gemischen aus Copoly(meth)acrylaten und Epoxidharzen einerseits als thermisch aktivierbarer Härter und zugleich als Klebharz verwendet werden kann. Die resultierenden Formulierungen eignen sich als thermisch nachvernetzbare Haftklebestoffe, und daraus herstellbare Haftklebebänder, die sich durch hohe Klebkraft und gute Lagerstabilität auszeichnen, ermöglichen mit Vorteil ein strukturelles Haftkleben ohne zusätzliche Hilfsmittel. Weitere Ausgestaltungen der Erfindung sind entsprechend den Merkmalen der Unteransprüche vorgesehen.

Die Copolyacrylate werden in konventionellen Reaktoren durch Emulsionspolymerisation oder Lösemittelpolymerisation hergestellt.
Die gemäß der Erfindung einzusetzenden Copoly(meth)acrylate werden aus olefinisch ungesättigten Monomeren gebildet, die vorzugsweise aus der Familie der Acrylate stammen, wobei mit dieser Bezeichnung Acrylsäure selbst und alle Derivate gemeint sind, die sich von der Acrylsäure durch Substitution in der 1- und/oder 2-Stellung und/oder an der Carboxylgruppe herleiten. Zur Haftklebstoffherstellung sind alle Derivate geeignet, die zu Homo- oder Copolymerisaten führen, die eine Glasübergangstemperatur unter -20 °C besitzen. Bevorzugt sind Ester der Acrylsäure und Methacrylsäure, von denen beispielsweise Butyl-, n-Octyl-, Isooctyl-, 2-Ethylhexyl-, Nonyl- oder Isononylacrylat, Decyl- und Dodecylacrylat genannt seien. In bestimmten Fällen, in denen besondere Eigenschaften des Haftklebematerials angestrebt werden, ist es vorteilhaft, wenn weitere radikalisch polymerisierbare Comonomere eingesetzt werden, wie z.B. mit Vinylacetat, Vinylpropionat, N-Vinylpyrrolidon, Vinylimidazol, Vinylidenchlorid, Styrol, 4-Butylstyrol, Mono- oder Diester der Malein- und/oder Fumarsäure.

Die gemäß der Erfindung einzusetzenden maleinsäureanhydrid-haltigen Verbindungen, die sowohl die Klebkraft steigern als auch als thermisch aktivierbare, sogenannte latente Härter wirken, bestehen aus Copolymeren aus Maleinsäureanhydrid und Alkylvinylethern der allgemeinen Formel 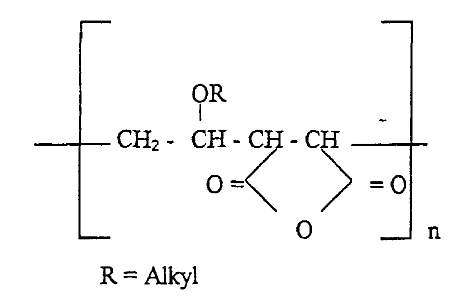 wobei R ein aliphalischer Alkylrest ist und n Werte zwischen 300 und 15.000 annehmen kann, so daß ein Zahlenmittel des Molekülgewichtes (M_{W}) von 50.000 bis 2·10⁶ resultiert. Besonders bevorzugt ist R = CH₃ und M_{W} = 2·10⁵ bis 1·10⁶ g/mol.

Der Anteil dieses Copolymers aus Maleinsäureanhydrid und Alkylvinylether, das in bekannter Weise durch radikalische Polymerisation hergestellt werden kann, beträgt, bezogen auf Gesamtfeststoff 1 - 20 Gew.%, bevorzugt 5 - 10 Gew.%. Klebharze, auch Tackifier genannt, sind Substanzen, die als Additive zu Elastomeren deren Tack, das heißt die Eigenschaft, nach kurzem, leichten Andruck fest auf Oberflächen zu haften, erhöhen. Um das zu erreichen, müssen Klebharze unter anderem eine ausreichende Verträglichkeit mit den Elastomeren besitzen. Tackifier selbst brauchen keinen Tack zu haben. Breit eingesetzte Tackifier sind unter anderem Terpen-Oligomere, aliphatische petrochemische Harze und Kolophoniumharze.

Dabei handelt es sich um Verbindungen relativ niedriger Molmassen (ca. 200 bis 2000 g/mol).

Die erfindungsgemäß verwendeten Verbindungen, die sowohl als Klebharz wie auch als latenter Härter wirken, sind höhermolekulare Polymere, nämlich Copolymere aus Maleinsäureanhydrid und Alkylvinylethern, die als polymere Klebharze bezeichnet werden. Ihre überraschende Wirkung sowohl als Klebharz als auch als latenter Härter wird einerseits auf die gute Kompatibilität mit den übrigen Bestandteilen des Haftklebstoffes und andererseits auf die Reaktivität der Anhydridfunktionalität mit den Epoxidgruppen des Epoxidharzes und den Säuregruppen des Copolyacrylats zurückgeführt.

Die Epoxidharze enthalten mindestens zwei Epoxidgruppen pro Molekül. Sie können bei Raumtemperatur flüssig oder fest sein. In letzterem Fall werden sie in einem Lösungsmittel gelöst, wenn die beschriebenen Haftklebestoffe hergestellt werden sollen. Repräsentative Beispiele umfassen phenolische Epoxidharze, Bisphenolepoxidharze und halogenierte Epoxidharze. Bevorzugte Epoxidharze sind die Bisphenolepoxidharze, in dieser Gruppe ist der Diglycidylether des Bisphenol A besonders bevorzugt. Er wird durch Reaktion von Bisphenol A mit Epichlorhydrin gewonnen und hat eine mittlere Epoxidäquivalentmasse von 170 - 1000 g/eq, bevorzugt 200 - 500 g/eq.
Mit steigendem Anteil Epoxidharz im Gesamtgemisch verbessert sich die Scherfestigkeit nach Aushärtung. Jedoch verschlechterte sich bislang die Klebkraft, da das Epoxidharz selbst keine haftklebenden Eigenschaften hat und häufig mit Copolyacrylaten unverträglich ist. Durch erfindungsgemäße Verwendung des Maleinsäureanhydrid-Copolymers wird jedoch die Verträglichkeit und Klebkraft überraschenderweise derart gesteigert, daß der Epoxidanteil über weite Bereiche variierbar ist. Er beträgt bei der erfindungsgemäßen Formulierung 10 - 50 Gew.% des Gesamtfeststoffgehalts, vorzugsweise 20 - 40 Gew.%.

Das Gemisch gemäß Erfindung kann neben den Copoly(meth)acrylaten und dem maleinsäureanhydrid-haltigen Klebharz je nach Anwendungsbereich weitere Zusätze, z.B. Verarbeitungshilfsmittel, Farbstoffe, Antioxdantien, flammhemmende Stoffe, oder Klebharze und Vernetzersysteme für Copolyacrylate enthalten. Dem Fachmann ist eine große Anzahl solcher Stoffe bekannt, die als Handelsprodukte erhältlich sind.

Die als Lösemittelklebstoffe anfallenden erfindungsgemäßen Haftklebestoffe können mittels bekannter Maschinen- und Anlagensysteme auf bahnförmige Materialien, z.B. Kunststofffolien oder -papiere, ein- oder beidseitig beschichtet zu Haftklebebändern verarbeitet werden. Diese thermisch nachvernetzbaren Haftklebebänder sind bei Raumtemperatur lagerstabil und können mit beliebigen Substraten verklebt und in der Klebung durch thermische Energiezufuhr gehärtet werden.

Das Kleben mit Haftklebebändern gemäß Erfindung erfolgt in der Regel durch Andrücken an eine Substratoberfläche bzw. Zusammendrücken zwischen zwei Substraten. Anschließend werden die geklebten Fügeteile Temperaturen von 120 - 180 °C, vorzugsweise 140 - 160 °C, ausgesetzt, und zwar für eine Zeitdauer von 3 - 30 min, vorzugsweise 10 - 20 min, abhängig vom gewählten Härtersystem. Man erhält damit hochkohäsive, temperaturbeständige, feuchte- und lösemittelbeständige Klebungen mit Scherfestigkeiten, die in den Bereich des strukturellen Klebens vordringen.
Die Energiezufuhr für das Aushärten der Klebefuge kann auch induktiv erfolgen. Dazu werden Anlagen verwendet, wie sie z.B. in der DE 197 25 840 beschrieben sind.

Die Erfindung wird nachfolgend durch Beispiele veranschaulicht:

### Erläuterungen:

Die dynamische Schälfestigkeit wurde in Anlehnung an DIN EN 1939 geprüft und ist in N/25 mm² angegeben. Dazu wird ein Klebestreifen mittels einer Metallwalze auf eine AFERA-Stahlplatte kaschiert. Mit einer Prüfgeschwindigkeit von 300 mm/min und einem Winkel von 180° wird die Probe von der Prüffläche durch eine Zugprüfmaschine abgezogen.

Die Zugscherfestigkeit wurde in Anlehnung an ISO 4587 bzw. DIN EN 1465 bestimmt. Dazu wurden Überlappungsklebungen mit INOX-Stahlblechen bei einer Prüffläche von 312,5 mm² (Breite: 25 mm, Länge: 12,5 mm) hergestellt. Die so geklebten Fügeteile wurden unter den angegebenen Zeiten und Temperaturen und einem Druck von 6 bar gelagert. Die Zugscherfestigkeit wurde sodann mittels Zugprüfmaschine mit einer Prüfgeschwindigkeit von 5 m/min bestimmt.

Der Gelgehalt ist ein Maß für den Aushärtungsgrad. ER wird durch 12-stündige Extraktion des Klebstoffs in Ethylacetat bestimmt, indem man den nicht gelösten Anteil ermittelt.

### Verwendete Bezeichnungen und Abkürzungen:

- AA =: Acrylsäure
- Araldit GT 7010 =: Diglycidylether des Biphenol A, Handelsprodukt der Fa. Ciba Spezialitätenchemie GmbH, Bergkamen
- Dicy =: Dicyandiamid (Dyhard 100 S, Handelsprodukt der Fa. SKW Trostberg)
- Diuron =: Dyhard UR 200, Handelsprodukt der Fa. SKW Trostberg
- EHA =: Ethylhexylacrylat
- Gantrez AN 119 =: Poly(maleinsäureanhydrid-methylvinylether), Handelsprodukt der Fa. ISP Global Technologies GmbH
- TiACA =: Titanacetylacetonat
- BA =: Butylacrylat
- MMA =: Methylmethacrylat
- IDA =: Isodecylacrylat

### Vergleichsbeispiel 1 (V1):

75 Gew.-Teile eines Copolyacrylats auf Basis 2-EHA/AA = 90/10,
25 Gew.-Teile Araldit GT 7071
0,4 Gew.-Teile Dicy
0,18 Gew.-Teile Diuron

Die Bestandteile werden in Ethylacetat gelöst, gemischt und auf übliche Weise auf silikonisiertem Papier so beschichtet, daß nach Trocknung ein 100 g/m²-Transferklebeband entsteht.

### Beispiel 1 (B1):

70 Gew.-Teile eines Copolyacrylats auf Basis 2-EHA/AA = 90/10
24,8 Gew.-Teile Araldit GT 7071
5 Gew.-Teile Gantrez AN 119
0,2 Gew.-Teile TiACA

Die Bestandteile werden wie im Vergleichsbeispiel 1 zu einem Haftklebeband verarbeitet.

### Beispiel 2 (B2):

60,8 Gew.-Teile eines Copolyacrylats auf Basis 2-EHA/AA = 93/7
24 Gew.-Teile Araldit GT 7071
15 Gew.-Teile Gantrez AN 139
0,2 Gew.-Teile TiACA

Die Bestandteile werden wie im Vergleichsbeispiel 1 zu einem Haftklebeband verarbeitet.

### Beispiel 3 (B3):

60 Gew.-Teile eines Copolyacrylats auf Basis 2-EHA/BA/MMA/AA = 70/15/10/5
20 Gew.-Teile Araldit GT 7071
19,8 Gew.-Teile Gantrez AN 119
0,2 Gew.-Teile TiACA

Die Bestandteile werden wie im Vergleichsbeispiel 1 zu einem Haftklebeband verarbeitet.

### Beispiel 4 (B4):

60,5 Gew.-Teile eines Copolyacrylats auf Basis IDA/AA = 94/6
20 Gew.-Teile Araldit GT 7071
19 Gew.-Teile Gantrez AN 119
0,5 Gew.-Teile TiACA

Die Bestandteile werden wie im Vergleichsbeispiel 1 zu einem Haftklebeband verarbeitet.

### Ergebnisse:

| | Klebstoff [N/25 mm] | Klebkraft nach 30 d/RT [N/25 mm] | Zugscherfestigkeit [N/312 mm²] | Gelgehalt [%] |
|---|---|---|---|---|
| V1 | 10 | 0 | a) 354 | a) 0 |
| | | | b) 1466 | b) 64 |
| B1 | 28 | 20 | a) 402 | a) 0 |
| | | | b) 1492 | b) 86 |
| B2 | 34 | 25 | a) 388 | a) 8 |
| | | | b) 1509 | b) 83 |
| B3 | 23 | 17 | a) 370 | a) 4 |
| | | | b) 1398 | b) 91 |
| B4 | 31 | 24 | a) 415 | a) 3 |
| | | | b) 1602 | b) 89 |

| | | | | |
|---|---|---|---|---|
| a) Klebung hergestellt mit 10 min/6 bar bei RT | | | | |
| b) Klebung hergestellt mit 10 min/6 bar bei 160 °C | | | | |

Die Ergebnisse zeigen:
- durch erfindungsgemäße Verwendung des maleinsäureanhydrid-haltigen Klebharzes herbeigeführte hohe Klebkraft bei den Beispielen 1-4 gegenüber dem Vergleichsbeispiel 1 (ohne dieses Klebharz)
- hohe Lagerstabilität bei den Beispielen 1-4, angezeigt durch geringen Abfall der Klebkraft innerhalb von 30 Tagen. V1 verliert seine Klebkraft vollkommen in dieser Zeit
- verbesserte Aushärtung bei den Beispielen 1-4 , angezeigt durch hohen Gelgehalt.

## Patentansprüche

1. Haft- und Strukturklebstoff zur aggressiven Fixierung über eine Klebefuge zu verbindender Fügeteile mit anschließender Aushärtung in der Klebefuge mittels thermischer Energiezufuhr, enthaltend eine Mischung von Copoly(meth)acrylaten und Epoxidharzen, **dadurch gekennzeichnet, daß** die Mischung als aktivierbare Komponenten zur thermischen Härtung sowie in der Funktion als Klebharz ein Copolymer enthält, welches Säureanhydridgruppen aufweist.

2. Haft- und Strukturklebstoff nach Anspruch 1, **dadurch gekennzeichnet, daß** das Copolymer entsprechend der Formel 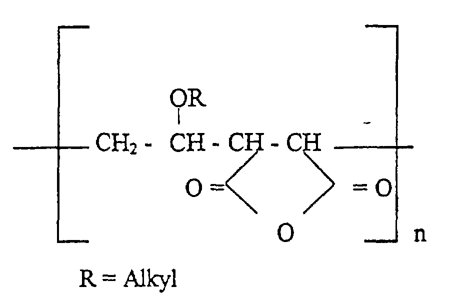 aus Maleinsäureanhydrid und Alkylvinylether besteht, wobei R ein aliphatischer Alkylrest, bevorzugt -CH₃ ist; n Werte zwischen 300 und 15.000 annehmen kann, das Zahlenmittel des Molekülgewichtes von 50.000 - 2·10⁶, bevorzugt 2·0⁵ - 2·10⁶ g/mol beträgt, und der Anteil, bezogen auf Gesamtfeststoff, zwischen 1 und 20 %, bevorzugt 5 und 10 %, beträgt.

3. Haft- und Strukturklebstoff nach Anspruch 1 oder 2, **dadurch gekennzeichnet, daß** das Copoly(meth)acrylat aus Acrylsäure und Acrylsäurederivaten besteht, die sich von der Acrylsäure durch Substitution in der 1- und/oder 2-Stellung und/oder der Carboxylgruppe herleiten.

4. Haft- und Strukturklebstoff nach einem oder mehreren der Ansprüche 1 bis 3, **dadurch gekennzeichnet, daß** er zusätzlich radikalisch polymerisierbare Comonomere enthält.

5. Haft- und Strukturklebstoff nach Anspruch 4, **dadurch gekennzeichnet, daß** er als radikalisch polymerisierbare Comonomere solche aus Vinylacetat, Vinylpropionat, N-Vinylpyrrolidon, Vinylimidazol, Vinylidenchlorid, Styrol, 4-Butylstyrol, Mono- oder Diester der Malein- oder Fumarsäure enthält.

6. Haft- und Strukturklebstoff nach Anspruch 1, **dadurch gekennzeichnet, daß** die Mischung Epoxidharze enthält, ausgewählt aus phenolischen Epoxidharzen, Bisphenolepoxidharzen, halogenierten Epoxidharzen oder Diglycidylether des Bisphenol A.

7. Haft- und Strukturklebstoff nach Anspruch 1 oder 6, **dadurch gekennzeichnet, daß** der Anteil der Epoxidharze an der Mischung 10 bis 50 Gew.% , bevorzugt 20 bis 40 Gew.%, beträgt.

8. Haft- und Strukturklebstoff nach einem oder mehreren der Ansprüche 1 bis 7, **dadurch gekennzeichnet, daß** er als Zusätze Verarbeitungsmittel, Farbstoffe, Antioxidantien, flammhemmende Stoffe, Klebharze oder Vernetzersysteme für Copolyacrylate enthält.

9. Verwendung des Haft- und Strukturklebstoffes nach den vorhergehenden Ansprüchen zur Herstellung von Haftklebebändern.

10. Verwendung des Haft- und Strukturklebstoffes nach den vorhergehenden Ansprüchen zur strukturellen Klebung von Fügeteilen.

11. Verfahren zur Härtung einer Fügeteile fixierenden Klebefuge, welche einen Haft- und Strukturklebstoff nach einem der Ansprüche 1 bis 8 enthält, **dadurch gekennzeichnet, daß** die Härtung durch Zufuhr thermischer Energie bei Temperaturen von 120 bis 180 °C, bevorzugt 140 bis 160 °C bei einer Einwirkungsdauer von 3 bis 30 min, bevorzugt 10 bis 20 min, durchgeführt wird.

## Claims

1. Pressure-sensitive and structural adhesive for the aggressive fixation, via a glue joint, of parts to be joined followed by curing in the glue joint adding thermal energy, comprising a mixture of copoly(meth)acrylates and epoxy resins, **characterized in that** the said mixture comprises, as activatable components for thermal curing as well as in the function of adhesive resin, a copolymer which contains acid anhydride groups.

2. Pressure-sensitive and structural adhesive according to claim 1, **characterized in that** the copolymer consists of maleic anhydride and alkyl vinyl ether in accordance with the formula: 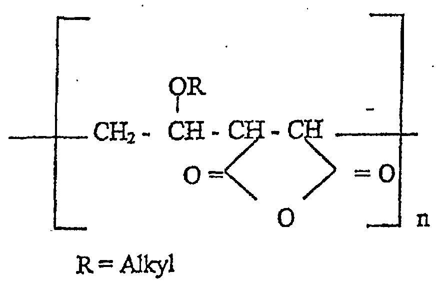 where R is an aliphatic alkyl residue, preferably -CH₃; n can adopt values between 300 and 15,000, the number average molecular weight is 50,000 - 2.10⁶, preferably 2.10⁵ - 2.10⁶ g/mol, and the content, relative to the total solids, amounts to between 1 and 20%, preferably 5 to 10%.

3. Pressure-sensitive and structural adhesive according to claim 1 or 2, **characterized in that** the copoly-(meth)acrylate consists of acrylic acid and acrylic acid derivatives which are derived from the acrylic acid by substitution in the 1-position and/or the 2-position and/or of the carboxyl group.

4. Pressure-sensitive and structural adhesive according to one or more of claims 1 to 3, **characterized in that** it additionally contains comonomers polymerizable by free-radical polymerization.

5. Pressure-sensitive and structural adhesive according to claim 4, **characterized in that**, as radically polymerizable comonomers, it contains comonomers of vinyl acetate, vinyl propionate, N-vinylpyrrolydone, vinyl imidazol, vinylidene chloride, styrene, 4-butyl styrene, monoesters or diesters of maleic or fumaric acid.

6. Pressure-sensitive and structural adhesive according to claim 1, **characterized in that** the mixture contains epoxy resins selected from phenolic epoxy resins, bisphenol epoxy resins, halogenated epoxy resins or diglycidyl ethers of bisphenol A.

7. Pressure-sensitive and structural adhesive according to claim 1 or 6, **characterized in that** the content of epoxy resins in the mixture is 10 to 50%-wt., preferably 20 to 40%-wt.

8. Pressure-sensitive and structural adhesive according to claims 1 to 7, **characterized in that**, as additives, it contains processing agents, colourants, antioxidants, fire-retardant substances, adhesive resins or cross-linker systems for copolyacrylates.

9. Use of the pressure-sensitive and structural adhesive according to the preceding claims for manufacturing pressure-sensitive adhesive tapes.

10. Use of the pressure-sensitive and structural adhesive according to the preceding claims for structural bonding of parts to be joined.

11. Process for curing a glue joint fixating joined parts, which glue joint contains a pressure-sensitive adhesive and structural adhesive according to one of claims 1 to 8, **characterized in that** the curing is carried through by adding thermal energy at temperatures from 120 to 180°C, preferably 140 to 160°C, with a duration of action from 3 to 30 min, preferably 10 to 20 min.

## Revendications

1. Adhésif de contact et de structure pour la fixation agressive de pièces d'assemblage à lier par un joint adhésif suivie d'un durcissement dans le joint adhésif par un apport d'énergie thermique, contenant un mélange de copolymères de (méth)acrylates et de résines époxyde, **caractérisé en ce que** le mélange contient un copolymère qui présente des groupes anhydride, en tant que composants pouvant être activés en vue d'un thermodurcissement ainsi que dans la fonction de résines adhésives.

2. Adhésif de contact et de structure selon la revendication 1, **caractérisé en ce que** le copolymère correspondant à la formule 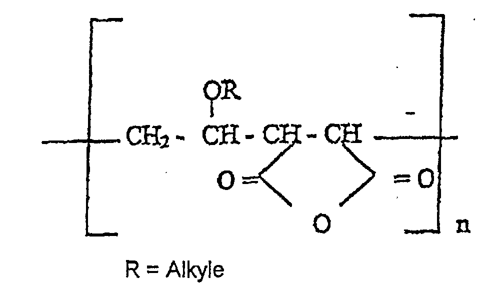 est constitué d'anhydride maléique et d'éther alkyle vinylique, dans laquelle R est un résidu alkyle aliphatique, de préférence -CH₃; n peut prendre des valeurs comprises entre 300 et 15 000, la masse moléculaire moyenne en nombre est de 50 000 à 2·10⁶, de préférence 2·10⁵ à 2·10⁶ g/mole, et la teneur est comprise entre 1 et 20%, de préférence entre 5 et 10%, par rapport au solide entier.

3. Adhésif de contact et de structure selon la revendication 1 ou 2, **caractérisé en ce que** le copolymère de (méth)acrylate est constitué d'acide acrylique et de dérivés de l'acide acrylique, qui sont dérivés de l'acide acrylique par substitution dans la position 1 et/ou 2 et/ou du groupe carboxyle.

4. Adhésif de contact et de structure selon l'une ou plusieurs des revendications 1 à 3, **caractérisé en ce qu'**il contient en plus des comonomères polymérisables par voie radicalaire.

5. Adhésif de contact et de structure selon la revendication 4, **caractérisé en ce qu'**il contient en tant que comonomères polymérisables par voie radicalaire, ceux à base d'acétate de vinyle, de propionate de vinyle, de N-vinylpyrrolidone, de vinylimidazole, de chlorure de vinylidène, de styrène, de 4-butylstyrène, de mono- ou di-esters de l'acide maléique ou fumarique.

6. Adhésif de contact et de structure selon la revendication 1, **caractérisé en ce que** le mélange contient des résines époxyde, choisies parmi les résines époxyde phénoliques, les résines époxyde à base de bisphénol, les résines époxyde halogénées, ou les éthers diglycidyliques du bisphénol A.

7. Adhésif de contact et de structure selon la revendication 1 ou 6, **caractérisé en ce que** la teneur des résines époxyde dans le mélange est de 10 à 50% en poids, de préférence de 20 à 40% en poids.

8. Adhésif de contact et de structure selon l'une ou plusieurs des revendications 1 à 7, **caractérisé en ce qu'**il contient en tant qu'additifs, des agents de mise en oeuvre, des colorants, des anti-oxydants, des ignifugeants, des résines collantes, ou des systèmes d'agents de réticulation pour les copolyacrylates.

9. Utilisation de l'adhésif de contact et de structure selon les revendications précédentes, pour la préparation de bandes adhésives.

10. Utilisation de l'adhésif de contact et de structure selon les revendications précédentes, pour le collage structural de pièces d'assemblage.

11. Procédé pour durcir un joint adhésif fixant des pièces d'assemblage, lequel contient un adhésif de contact et de structure selon l'une quelconque des revendications 1 à 8, **caractérisé en ce que** le durcissement est réalisé par apport d'énergie thermique, à des températures de 120 à 180°C, de préférence de 140 à 160°C, pendant une durée d'action de 3 à 30 min, de préférence de 10 à 20 min.
